# EUROPEAN PATENT APPLICATION

(11) **EP 4 640 737 A1**
(43) Date of publication of application: **29.10.2025**
(21) Application number: 23906633.5
(22) Date of filing: 29.11.2023
(51) Int. Cl.: C08G 63/672, C08J 5/00

(54) **POLYESTER RESIN, RESIN COMPOSITION FOR COSMETIC CONTAINER, MOLDED ARTICLE, AND COSMETIC CONTAINER**

(30) Priority: 19.12.2022 JP 2022202553
(71) Applicant: MITSUBISHI GAS CHEMICAL COMPANY, INC., Chiyoda-ku Tokyo 100-8324 (JP)
(72) Inventor: IKEDA, Shinichi, Hiratsuka-shi, Kanagawa 254-0016 (JP); SUZUKI, Syu, Hiratsuka-shi, Kanagawa 254-0016 (JP); MORISHITA, Takami, Hiratsuka-shi, Kanagawa 254-0016 (JP)
(74) Representative: Vossius & Partner Patentanwälte Rechtsanwälte mbB
(86) International application number: PCT/JP2023/042784
(87) International publication number: WO 2024/135265

(57) **Abstract**

A polyester resin comprising diol constituent units and dicarboxylic acid constituent units, wherein 1 to 25 mol% of the total diol constituent units are diol constituent units (α) having a cyclic acetal backbone, and wherein 15 to 40 mol% of the total dicarboxylic acid constituent units are dicarboxylic acid constituent units (β) derived from isophthalic acid.

## Description

### Technical Field

The present invention relates to a polyester resin, a resin composition for cosmetic containers, molded articles, and cosmetic containers.

### Background Art

Since saturated crystalline polyester resins such as polyethylene terephthalate (hereinafter sometimes referred to as PET) have excellent mechanical strength, heat resistance, transparency, recyclability, and gas barrier properties, their molded articles are widely used as containers for soft drinks, carbonated beverages, condiments, detergents, cosmetics, etc.

For example, Patent Literature 1 discloses a polyester resin in which the content of diol constituent units having a cyclic acetal backbone and the content of dicarboxylic acid constituent units derived from isophthalic acid are adjusted, in order to provide a polyester resin having an excellent balance of transparency, heat resistance, and hue.

### Citation List

### Patent Literature

Patent Literature 1: Japanese Patent Laid-Open No. 2021-6621

### Summary of Invention

### Technical Problem

Patent Literature 1 has examined transparency, heat resistance, and hue, but not gas barrier properties. The gas barrier properties are properties necessary for applications of cosmetic containers, for example.

Therefore, an object of the present invention is to provide a polyester resin having an excellent balance of gas barrier properties, heat resistance, and transparency.

### Solution to Problem

As a result of intensive studies by the present inventors, it has been found that a polyester resin containing diol constituent units having a cyclic acetal backbone and dicarboxylic acid constituent units derived from isophthalic acid in predetermined amounts can solve the above problem.

The present invention includes the following embodiments.
[1] A polyester resin comprising diol constituent units and dicarboxylic acid constituent units, wherein
   1 to 25 mol% of the total diol constituent units are diol constituent units (α) having a cyclic acetal backbone, and
   15 to 40 mol% of the total dicarboxylic acid constituent units are dicarboxylic acid constituent units (β) derived from isophthalic acid.
[2] The polyester resin according to [1], wherein 15 to 25 mol% of the total diol constituent units are the diol constituent units (α) having a cyclic acetal backbone.
[2-1] The polyester resin according to [1] or [2], wherein 10 to 25 mol% of the total diol constituent units are the diol constituent units (α) having a cyclic acetal backbone.
[3] The polyester resin according to any one of [1] to [2-1], wherein the diol constituent units (α) are derived from a compound represented by the following formula (a) and/or (b): 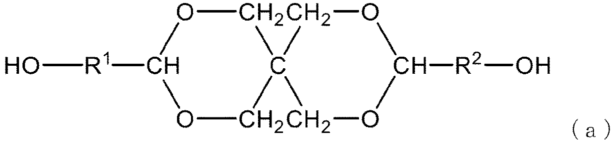 wherein R¹ and R² each independently represents a divalent aliphatic hydrocarbon group having 1 to 10 carbon atoms, a divalent alicyclic hydrocarbon group having 3 to 10 carbon atoms, or a divalent aromatic hydrocarbon group having 6 to 10 carbon atoms, 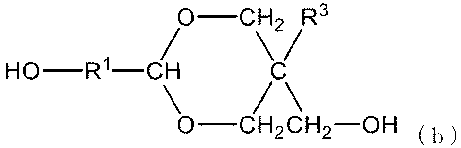 wherein R¹ is as described above, and R³ represents a monovalent aliphatic hydrocarbon group having 1 to 10 carbon atoms, a monovalent alicyclic hydrocarbon group having 3 to 10 carbon atoms, or a monovalent aromatic hydrocarbon group having 6 to 10 carbon atoms.
[4] The polyester resin according to any one of [1] to [3], wherein the diol constituent units (α) are derived from 3,9-bis(1,1-dimethyl-2-hydroxyethyl)-2,4,8,10-tetraoxaspiro[5.5]undecane and/or 5-methylol-5-ethyl-2-(1,1-dimethyl-2-hydroxyethyl)-1,3-dioxane.
[5] The polyester resin according to any one of [1] to [4], wherein the diol constituent units further comprise constituent units (γ) derived from ethylene glycol.
[6] The polyester resin according to any one of [1] to [5], wherein the dicarboxylic acid constituent units further comprise constituent units (δ) derived from terephthalic acid.
[7] A resin composition for cosmetic containers, comprising the polyester resin according to any one of [1] to [6].
[8] A molded article comprising the polyester resin according to any one of [1] to [6].
[9] A cosmetic container comprising the polyester resin according to any one of [1] to [6].

### Advantageous Effect of Invention

According to the present invention, a polyester resin having an excellent balance of gas barrier properties, heat resistance, and transparency, can be provided.

### Description of Embodiments

Hereinafter, embodiments of the present invention will be specifically described, but the present invention is not limited to these embodiments, and various modifications are possible within the scope of not departing from the spirit of the invention.

### <Polyester Resin>

One embodiment of the present invention relates to a polyester resin, the polyester resin comprising diol constituent units and dicarboxylic acid constituent units, wherein 1 to 25 mol% of the total diol constituent units are diol constituent units (α) having a cyclic acetal backbone, and wherein 15 to 40 mol% of the total dicarboxylic acid constituent units are dicarboxylic acid constituent units (β) derived from isophthalic acid.

The polyester resin according to the present embodiments has an excellent balance of gas barrier properties, heat resistance, and transparency.

### (Diol Constituent Units)

The polyester resin according to the present embodiments contains the diol constituent units (α) having a cyclic acetal backbone in an amount of 1 to 25 mol% based on the total diol constituent units. From the viewpoint of further improving a balance of gas barrier properties, heat resistance, and transparency, the amount of the diol constituent units (α) is preferably 10 to 25 mol%, more preferably 15 to 25 mol%, and even more preferably 20 to 25 mol%.

The diol constituent units (α) are preferably derived from a compound represented by the following formula (a) and/or (b): 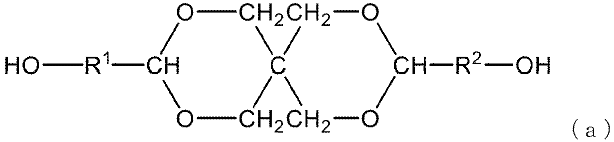 wherein R¹ and R² each independently represents a divalent aliphatic hydrocarbon group having 1 to 10 carbon atoms, a divalent alicyclic hydrocarbon group having 3 to 10 carbon atoms, or a divalent aromatic hydrocarbon group having 6 to 10 carbon atoms, 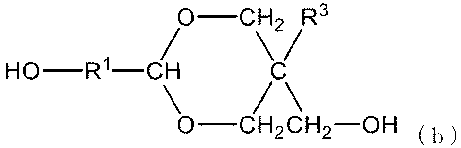 wherein R¹ is as described above, and R³ represents a monovalent aliphatic hydrocarbon group having 1 to 10 carbon atoms, a monovalent alicyclic hydrocarbon group having 3 to 10 carbon atoms, or a monovalent aromatic hydrocarbon group having 6 to 10 carbon atoms.

In formulae (a) and (b), R¹ and R² are preferably each independently a methylene group, an ethylene group, a propylene group, a butylene group, or a structural isomer of these groups. Examples of such structural isomers include an isopropylene group and an isobutylene group.

In formula (b), R³ is preferably a methyl group, an ethyl group, a propyl group, a butyl group, or a structural isomer of these groups. Examples of such structural isomers include an isopropyl group and an isobutyl group.

The compound represented by formula (a) is preferably 3,9-bis(1,1-dimethyl-2-hydroxyethyl)-2,4,8,10-tetraoxaspiro[5.5]undecane.

The compound represented by formula (b) is preferably 5-methylol-5-ethyl-2-(1,1-dimethyl-2-hydroxyethyl)-1,3-dioxane.

The polyester resin according to the present embodiments may further contain, in addition to the above diol constituent units (α), diol constituent units having no cyclic acetal backbone (hereinafter referred to as "second diol constituent units").

Examples of the second diol constituent units include constituent units derived from the following compounds:
aliphatic diols such as ethylene glycol, trimethylene glycol, 1,4-butanediol, 1,5-pentanediol, 1,6-hexanediol, diethylene glycol, propylene glycol, and neopentyl glycol;
alicyclic diols such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralin dimethanol, norbornane dimethanol, tricyclodecane dimethanol, and pentacyclododecane dimethanol;
polyether compounds such as polyethylene glycol, polypropylene glycol, and polybutylene glycol;
bisphenols such as 4,4'-(1-methylethylidene)bisphenol, methylenebisphenol (bisphenol F), 4,4'-cyclohexylidene bisphenol (bisphenol Z), and 4,4'-sulfonylbisphenol (bisphenol S);
alkylene oxide adducts of the above bisphenols;
aromatic dihydroxy compounds such as hydroquinone, resorcin, 4,4'-dihydroxybiphenyl, 4,4'-dihydroxydiphenyl ether, and 4,4'-dihydroxydiphenylbenzophenone; and
diols such as alkylene oxide adducts of the above aromatic dihydroxy compounds.

The second diol constituent units are preferably derived from ethylene glycol, trimethylene glycol, 1,4-butanediol, or 1,4-cyclohexanedimethanol from the viewpoints of mechanical strength and heat resistance, and are more preferably derived from the ethylene glycol.

The amount of the second diol constituent units (in particular, the constituent units (γ) derived from ethylene glycol) is preferably 75 to 99 mol% based on the total diol constituent units, more preferably 75 to 90 mol%, even more preferably 75 to 85 mol%, and particularly preferably 75 to 80 mol%.

### (Dicarboxylic Acid Constituent Units)

The polyester resin according to the present embodiments contains dicarboxylic acid constituent units (β) derived from isophthalic acid in an amount of 15 to 40 mol% based on the total dicarboxylic acid constituent units. From the viewpoint of further improving a balance of gas barrier properties, heat resistance, and transparency, the amount of the dicarboxylic acid constituent units (β) is preferably 17 to 40 mol%, and more preferably 19 to 40 mol%.

The polyester resin according to the present embodiments may further contain, in addition to the above dicarboxylic acid constituent units (β), other dicarboxylic acid constituent units (hereinafter referred to as "second dicarboxylic acid constituent units").

Examples of the second dicarboxylic acid constituent units include constituent units derived from the following compounds:
aliphatic dicarboxylic acids such as succinic acid, glutaric acid, adipic acid, pimelic acid, suberic acid, azelaic acid, sebacic acid, decanedicarboxylic acid, dodecanedicarboxylic acid, cyclohexanedicarboxylic acid, decalindicarboxylic acid, norbornanedicarboxylic acid, tricyclodecanedicarboxylic acid, pentacyclododecane dicarboxylic acid, 3,9-bis(1,1-dimethyl-2-carboxyethyl)-2,4,8,10-tetraoxaspiro[5.5]undecane, 5-carboxy-5-ethyl-2-(1,1-dimethyl-2-carboxyethyl)-1,3-dioxane, and dimeric acid; and
aromatic dicarboxylic acids such as terephthalic acid, phthalic acid, 2-methyl terephthalic acid, 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, biphenyldicarboxylic acid, tetralin dicarboxylic acid.

The second dicarboxylic acid constituent units are, from the viewpoints of mechanical strength and heat resistance, preferably derived from the aromatic dicarboxylic acids, more preferably derived from the terephthalic acid.

The amount of the second dicarboxylic acid constituent units (in particular, the constituent units (δ) derived from the terephthalic acid) is preferably 60 to 85 mol% based on the total dicarboxylic acid constituent units, more preferably 60 to 83 mol%, and even more preferably 60 to 81 mol%.

### (Oxygen Transmission Coefficient)

An oxygen transmission coefficient of the polyester resin according to the present embodiments is preferably 1.0 to 7.0 cc·mm/m²·day·atm. The oxygen transmission coefficient can be measured by a method described in Examples described later.

### (Glass Transition Temperature)

A glass transition temperature (Tg) of the polyester resin according to the present embodiments is preferably 70 to 110°C. The glass transition temperature can be measured by a method described in Examples described later.

### <Method for Producing Polyester Resin>

A method for producing the polyester resin according to the present embodiments is not particularly limited, and a known method can be adopted. Examples of the known method include a method described in Japanese Patent Laid-Open No. 2021-6621.

### <Resin Composition for Cosmetic Containers>

One embodiment of the present invention relates to a resin composition for cosmetic containers, containing the polyester resin described above.

By using the resin composition for cosmetic containers according to the present embodiments, molded articles (e.g., cosmetic containers) having an excellent balance of gas barrier properties, heat resistance, and transparency can be obtained.

The resin composition for cosmetic containers according to the present embodiments may contain, in addition to the above polyester resin, other components. Examples of other components include an antioxidant, an ultraviolet absorbent, a lubricant, a surfactant, an antistatic agent, a flame retardant, pigment, and a crystallization nucleating agent.

### <Molded Articles / Cosmetic Containers>

One embodiment of the present invention relates to molded articles (preferably cosmetic containers) containing the polyester resin described above.

The molded articles according to the present embodiments (preferably cosmetic containers) has an excellent balance of gas barrier properties, heat resistance, and transparency because of containing the above polyester resin.

### Examples

Hereinafter, the present invention will be described in detail using Examples and Comparative Examples, but the technical scope of the present invention is not limited by these Examples.

Abbreviations described in Examples and Comparative Examples have the following meanings.
DMT: Dimethyl terephthalate
DMI: Dimethyl isophthalate
TBT: Tetra-n-butyl titanate
EG: Ethylene glycol
SPG: 3,9-Bis(1,1-dimethyl-2-hydroxyethyl)-2,4,8,10-tetraoxaspiro[5.5]undecane
TEP: Triethyl phosphate

### <Example 1: Production of Polyester Resin>

In a 30 liter (L) polyester production apparatus equipped with a packed tower rectifier, a partial condenser, a total condenser, a cold trap, an agitator blade, a heating device, and a nitrogen inlet tube, DMT (66.5 moles), DMI (16.6 moles), germanium oxide (0.021 moles), EG solution of TBT (0.0050 moles as TBT), and EG (149.6 moles) were charged. The temperature was raised to 230°C under normal pressure and nitrogen atmosphere, and ester exchange reaction was performed. After the reaction conversion rate of a dicarboxylic acid component was 85 mol% or more, an EG solution of potassium acetate (0.017 moles as potassium acetate) and TEP (0.017 moles) were added. By simultaneously lowering the temperature to 185°C and reducing the pressure to 13.3 kPa, the EG was removed from the system. After recompression, SPG (20.0 moles) was added. The ester exchange reaction was proceeded by gradually increasing the temperature to 225°C and reducing the pressure to 13.3 kPa, and finally the polycondensation reaction was performed at 280°C and 0.3 kPa or less. The viscosity of the reactant gradually increased, and the reaction was terminated when it reached a moderate melt viscosity to obtain the polyester resin of Example 1.

### <Example 2: Production of Polyester Resin>

The operation was performed in the same manner as in Example 1 except that 85.3 moles of DMT, 16.2 moles of DMI, 0.025 moles of germanium oxide, 0.0061 moles of EG solution of TBT as TBT, 182.7 moles of EG, 0.020 moles of EG solution of potassium acetate as potassium acetate, 0.021 moles of TEP, and 2.07 moles of SPG were charged, to obtain the polyester resin of Example 2.

### <Example 3: Production of Polyester Resin>

The operation was performed in the same manner as in Example 1 except that 61.9 moles of DMT, 39.6 moles of DMI, 0.025 moles of germanium oxide, 0.0061 moles of EG solution of TBT as TBT, 182.7 moles of EG, 0.020 moles of EG solution of potassium acetate as potassium acetate, 0.021 moles of TEP, and 2.07 moles of SPG were charged, to obtain the polyester resin of Example 3.

### <Example 4: Production of Polyester Resin>

The operation was performed in the same manner as in Example 1 except that 67.3 moles of DMT, 11.9 moles of DMI, 0.020 moles of germanium oxide, 0.0048 moles of EG solution of TBT as TBT, 142.4 moles of EG, 0.016 moles of EG solution of potassium acetate as potassium acetate, 0.017 moles of TEP, and 20.18 moles of SPG were charged, to obtain the polyester resin of Example 4.

### <Example 5: Production of Polyester Resin>

The operation was performed in the same manner as in Example 1 except that 48.3 moles of DMT, 30.9 moles of DMI, 0.020 moles of germanium oxide, 0.0048 moles of EG solution of TBT as TBT, 142.4 moles of EG, 0.016 moles of EG solution of potassium acetate as potassium acetate, 0.017 moles of TEP, and 20.18 moles of SPG were charged, to obtain the polyester resin of Example 5.

### <Comparative Example 1>

As Comparative Example 1, the polyester resin (product name: ALTESTER (R)) "S3012" produced by MITSUBISHI GAS CHEMICAL COMPANY, INC. was used.

### <Comparative Example 2>

As Comparative Example 2, the polyester resin (product name: ALTESTER (R)) "S4500" produced by MITSUBISHI GAS CHEMICAL COMPANY, INC. was used.

### <Comparative Example 3: Production of Polyester Resin>

The operation was performed in the same manner as in Example 1 except that 90.4 moles of DMT, no DMI, 0.023 moles of germanium oxide, 0.0054 moles of EG solution of TBT as TBT, 162.7 moles of EG, 0.018 moles of EG solution of potassium acetate as potassium acetate, 0.019 moles of TEP, and 11.07 moles of SPG were charged, to obtain the polyester resin of Comparative Example 3.

Each polyester resin was evaluated as follows. The evaluation results are shown in Table 1 and Table 2.

### <1. Copolymerization Ratio of Diol Having Cyclic Acetal Backbone, and The Like>

A copolymerization ratio of diol having a cyclic acetal backbone, a ratio of terephthalic acid units and a ratio of isophthalic acid units in the polyester resin were calculated by ¹H-NMR measurement.

The measurement device used was an AscendTM 500 produced by Bruker Bio Spin K.K. Heavy chloroform was used as the solvent. In case of insolubility in heavy chloroform, a few drops of trifluoroacetic acid were used to dissolve the polyester resin in heavy chloroform.

### <2. Oxygen Transmission Coefficient>

A 100 µm thick film was produced using a twin-screw extruder (screw diameter: 20 mm, L/D: 25) under the conditions of a cylinder temperature of 265°C, a die temperature of 265°C, and a screw rotation speed of 50 rpm. With respect to the film produced, the oxygen transmission coefficient was measured on the 30^{th} day after the start of measurement using an oxygen permeation analyzer ("OX-TRAN 2-61" produced by MOCON Inc.) under the atmosphere of a temperature of 23°C and a relative humidity of 60%. The lower the measured value, the better the oxygen barrier property.

### <3. Glass Transition Temperature>

The glass transition temperature (Tg) of the polyester resin was measured using a differential scanning calorimeter (model: DSC/TA-50WS) produced by Shimadzu Corporation, with approximately 10 mg of the sample placed in an unsealed aluminum container, at a temperature increase rate of 20°C/min in a flow of nitrogen gas (30 mL/min). The glass transition temperature was defined as the temperature at which the DSC curve changes by 1/2 of the difference between the baselines before and after the transition. The higher the Tg, the better the heat resistance.

### <4. Transparency of Molded Article>

A J85AD injection-molding machine produced by JSW was used to produce molded pieces from the polyester resin. Namely, a cylinder temperature and a mold temperature were set at 250°C and 50°C, respectively, and disks having a diameter of 50 mm and a thickness of 5.0 mm were injection-molded, and then insert-molded to obtain disk-shaped molded pieces having a thickness of 10 mm.

The transparency of the disk-shaped molded pieces obtained in the above manner was evaluated as follows.
No appearance defect: ○
Blushing of adhesive interface: ×

**[Table 1]**

| | Example 1 | Example 2 | Example 3 | Example 4 | Example 5 |
|---|---|---|---|---|---|
| SPG units in diol constituent units mol% | 20.4 | 1.7 | 2.1 | 24.9 | 24.8 |
| Isophthalic acid units in dicarboxylic acid constituent units mol% | 19.8 | 16.0 | 38.7 | 15.2 | 39.2 |
| Oxygen transmission coefficient (23°C60%RH, unstretched) cc·mm/m²·day·atm | 5.6 | 3.3 | 2.9 | 6.2 | 5.7 |
| Tg °C | 89 | 78 | 71 | 93 | 87 |
| Transparency of molded articles | ○ | ○ | ○ | ○ | ○ |

**[Table 2]**

| | Comparative Example 1 | Comparative Example 2 | Comparative Examples 3 |
|---|---|---|---|
| SPG units in diol constituent units mol% | 29.8 | 45.2 | 12.0 |
| Isophthalic acid units in dicarboxylic acid constituent units mol% | - | - | - |
| Oxygen transmission coefficient (23°C60%RH, unstretched) cc·mm/m²·day·atm | 7.3 | 8.7 | 5.2 |
| Tg °C | 100 | 109 | 90 |
| Transparency of molded articles | ○ | ○ | × |

## Claims

1. A polyester resin comprising diol constituent units and dicarboxylic acid constituent units, wherein
1 to 25 mol% of the total diol constituent units are diol constituent units (α) having a cyclic acetal backbone, and
15 to 40 mol% of the total dicarboxylic acid constituent units are dicarboxylic acid constituent units (β) derived from isophthalic acid.

2. The polyester resin according to claim 1, wherein 10 to 25 mol% of the total diol constituent units are the diol constituent units (α) having a cyclic acetal backbone.

3. The polyester resin according to claim 1, wherein the diol constituent units (α) are derived from a compound represented by the following formula (a) and/or (b): 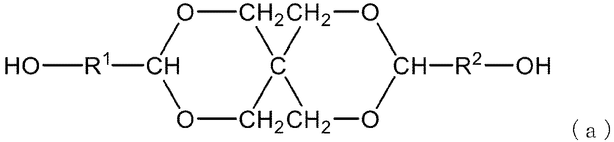 wherein R¹ and R² each independently represents a divalent aliphatic hydrocarbon group having 1 to 10 carbon atoms, a divalent alicyclic hydrocarbon group having 3 to 10 carbon atoms, or a divalent aromatic hydrocarbon group having 6 to 10 carbon atoms, 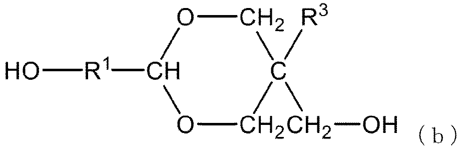 wherein R¹ is as described above, and R³ represents a monovalent aliphatic hydrocarbon group having 1 to 10 carbon atoms, a monovalent alicyclic hydrocarbon group having 3 to 10 carbon atoms, or a monovalent aromatic hydrocarbon group having 6 to 10 carbon atoms.

4. The polyester resin according to claim 3, wherein the diol constituent units (α) are derived from 3,9-bis(1,1-dimethyl-2-hydroxyethyl)-2,4,8,10-tetraoxaspiro[5.5]undecane and/or 5-methylol-5-ethyl-2-(1,1-dimethyl-2-hydroxyethyl)-1,3-dioxane.

5. The polyester resin according to claim 1, wherein the diol constituent units further comprise constituent units (γ) derived from ethylene glycol.

6. The polyester resin according to claim 1, wherein the dicarboxylic acid constituent units further comprise constituent units (δ) derived from terephthalic acid.

7. A resin composition for cosmetic containers, comprising the polyester resin according to any one of claims 1 to 6.

8. A molded article comprising the polyester resin according to any one of claims 1 to 6.

9. A cosmetic container comprising the polyester resin according to any one of claims 1 to 6.
